# EUROPÄISCHE PATENTSCHRIFT

(11) **EP 1 296 441 B1**
(45) Veröffentlichungstag und Bekanntmachung des Hinweises auf die Patenterteilung: **16.08.2006**
(21) Anmeldenummer: 01810934.8
(22) Anmeldetag: 25.09.2001
(51) Int. Cl.: H02M 1/12, H02M 7/5387, H02J 3/01

(54) **Energieerzeugungseinrichtung**
Power generating arrangement
Système de production d'énergie

(43) Veröffentlichungstag der Anmeldung: 26.03.2003
(73) Patentinhaber: ABB Schweiz AG, 5400 Baden (CH)
(72) Erfinder: Hofstetter, Bruno, 5200 Brugg (CH); Golle, Ingo, 5412 Gebenstorf (CH); Ronner, Beat, 5415 Nussbaumen (CH); Mullis, Martin, 8057 Zürich (CH)
(74) Vertreter: ABB Patent Attorneys

(56) Entgegenhaltungen:
- EP-A- 0 682 401
- EP-A- 0 809 879
- EP-A- 1 069 673
- SE-B- 410 952
- US-A- 5 811 939
- US-A- 5 903 116
- US-A- 6 154 378
- MALESANI L ET AL: "AC/DC/AC PWM CONVERTER WITH REDUCED ENERGY STORAGE IN THE DC LINK" IEEE TRANSACTIONS ON INDUSTRY APPLICATIONS, IEEE INC. NEW YORK, US, Bd. 31, Nr. 2, 1. März 1995 (1995-03-01), Seiten 287-292, XP000513103 ISSN: 0093-9994
- LINDGREN M ET AL: "Control of a voltage-source converter connected to the grid through an LCL-filter-application to active filtering" POWER ELECTRONICS SPECIALISTS CONFERENCE, 1998. PESC 98 RECORD. 29TH ANNUAL IEEE FUKUOKA, JAPAN 17-22 MAY 1998, NEW YORK, NY, USA,IEEE, US, 17. Mai 1998 (1998-05-17), Seiten 229-235, XP010294951 ISBN: 0-7803-4489-8
- LINDGREN M B: "Feedforward-time efficient control of a voltage source converter connected to the grid by lowpass filters" POWER ELECTRONICS SPECIALISTS CONFERENCE, 1995. PESC '95 RECORD., 26TH ANNUAL IEEE ATLANTA, GA, USA 18-22 JUNE 1995, NEW YORK, NY, USA,IEEE, US, 18. Juni 1995 (1995-06-18), Seiten 1028-1032, XP010150677 ISBN: 0-7803-2730-6

## Beschreibung

### Technisches Gebiet

Die vorliegende Erfindung bezieht sich auf das Gebiet der Energieerzeugung. Sie betrifft eine, insbesondere mit einem öffentlichen Wechselspannungsversorgungsnetz und/oder einem Inselnetz verbindbare Energieerzeugungseinrichtung gemäss dem Oberbegriff des unabhängigen Anspruchs.

### Stand der Technik

Energieerzeugungseinrichtungen werden heute hauptsächlich zur zusätzlichen Erzeugung elektrischer Energie zu herkömmlichen elektrischen Wechselspannungsversorgungsnetzen und/oder zur Versorgung von Inselnetzen in entlegenen Gebieten eingesetzt. Eine solche Energieerzeugungseinrichtung ist beispielsweise in der US 5,903,116 offenbart. Darin weist die Energieerzeugungseinrichtung eine Antriebseinheit auf, welche als Turbine ausgeführt ist. Die Antriebseinheit ist mit einem Generator gekoppelt, der über einen passiven Gleichrichter mit einem Gleichspannungszwischenkreis verbunden ist. Der Gleichspannungszwischenkreis ist aus zwei Kondensatoren gebildet, die als elektrische Energiespeicher dienen. Weiterhin ist mit dem Gleichspannungszwischenkreis ein Wechselrichter verbunden, der wechselspannungsausgangsseitig n-phasig mit n Wechselspannungsanschlüssen ausgebildet ist, wobei insbesondere n =3 ist. Zudem ist am Gleichspannungszwischenkreis eine Symmetriervorrichtung angeschlossen, welche aus zwei in Serie geschalteten Leistungshalbleiterschaltern gebildet ist, wobei zu jedem Leistungshalbleiterschalter eine Diode antiparallel geschaltet ist. Der Verbindungspunkt der Leistungshalbleiterschalter ist über eine Induktivität mit dem Verbindungspunkt der beiden Kondensatoren des Gleichspannungszwischenkreises verbunden. Desweiteren ist der Verbindungspunkt der Leistungshalbleiterschalter als Nullpunktanschluss ausgebildet, wobei der Nullpunktanschluss als Anschluss für einen Nullpunkt eines Inselnetzes dient. Durch entsprechende Ansteuerung der Leistungshalbleiterschalter kann die Spannung über den beiden Kondensatoren des Gleichspannungszwischenkreises symmetriert werden. Darüber hinaus ist an den Wechselspannungsanschlüssen des Wechselrichters der Energieerzeugungseinrichtung eine gängige Filteranordnung angeschlossen, wobei die Filteranordnung mit dem elektrischen Wechselspannungsversorgungsnetz verbunden ist. Eine solche gängige Filteranordnung ist beispielsweise in der EP 0 682 401 A1 angegeben. Darin ist an jedem Wechselspannungsanschluss eines dreiphasigen Wechselrichters eine Filterinduktivität angeschlossen, welche jeweils mit einem Filterkondensator verbunden ist, wobei der Verbindungspunkt der Filterinduktivität mit dem Filterkondensator einen Netzanschluss bildet.

Problematisch bei der vorstehend genannten Symmetriervorrichtung ist, dass es bei einer Wechselkomponente, insbesondere bei einer höherfrequenten Wechselkomponente eines Stromes über den Nullpunktanschluss zu unerwünschten Schwankungen in der Gleichspannung des Gleichspannungszwischenkreises kommen kann. Weiterhin führt eine Gleichkomponente des Stromes über den Nullpunktanschluss dazu, dass der Gleichspannungszwischenkreis je nach Vorzeichen des Stromes ge- oder entladen wird. Ein Aufladen des Gleichspannungszwischenkreises kann aber eine unzulässig hohe Gleichspannung am Gleichspannungszwischenkreis bewirken, wodurch es zu einem Überschlag kommen kann, durch welchen der Gleichspannungszwischenkreis, insbesondere die Kondensatoren sowie Bauelemente des Gleichrichters und des Wechselrichters beschädigt oder zerstört werden können. Weiterhin führt eine solche Gleichkomponente wie auch eine eventuell auftretende Wechselkomponente des Stromes über den Nullpunktanschluss zu einer Verschiebung der Spannungsverhältnisse an den beiden Kondensatoren des Gleichspannungszwischenkreises. Dies kann an einem der Kondensatoren zu einer unzulässig hohen Spannung führen, die den Kondensator beschädigen oder zerstören kann. Ein derartige Unsymmetrie ist nur durch eine Überwachung der Spannung an jedem Kondensator des Gleichspannungszwischenkreises und eine mit der Überwachung gekoppelte aufwendige Ansteuerung der Leistungshalbleiterschalter beherrschbar beziehungsweise behebbar.

Bei Störungen im elektrischen Wechselspannungsversorgungsnetz kann eine vorstehend genannten Filteranordnung aufgrund ihres Aufbaus mit einem Filterkondensator und einer Filterinduktivität solche Störungen nicht vom Wechselrichter der Energieerzeugungseinrichtung fernhalten. Weiterhin werden auf die Netzspannung aufmodulierte mittel- und hochfrequente Rundsteuersignale durch eine solche Filteranordnung im wesentlichen ausgefiltert, wobei diese jedoch je nach Ausführung der Energieerzeugungseinrichtung zu Informations- und/oder Steuerzwecken benötigt werden.

### Darstellung der Erfindung

Aufgabe der Erfindung ist es deshalb, eine gegen Störungen robuste Energieerzeugungseinrichtung anzugeben, welche zudem einen Nullpunktanschluss, beispielweise für ein neben dem elektrischen Wechselspannungsversorgungsnetz zu speisendes Inselnetz bereitstellt, an welchem ein nahezu beliebigen Potential eingestellt werden kann. Diese Aufgabe wird durch die Merkmale des Anspruchs 1 gelöst. In den Unteransprüchen sind vorteilhafte Weiterbildungen der Erfindung angegeben.

Die erfindungsgemässe Energieerzeugungseinrichtung umfasst einen mit einer Antriebseinheit, insbesondere mit einer Turbine gekoppelten Generator, der über einen Gleichrichter mit einem Gleichspannungszwischenkreis verbunden ist, wobei ein mit dem Gleichspannungszwischenkreis verbundenen Wechselrichter vorgesehen ist, der wechselspannungsausgangsseitig n-phasig mit n Wechselspannungsanschlüssen ausgebildet ist. An den Wechselspannungsanschlüssen des Wechselrichters ist weiterhin eine Filteranordnung angeschlossen. Erfindungsgemäss weist die Filteranordnung pro Wechselspannungsanschluss eine erste Filterinduktivität und eine dazu in Serie geschaltete zweite Filterinduktivität auf, wobei am Verbindungspunkt der ersten Filterinduktivität mit der zweiten Filterinduktivität ein Filterkondensator angeschlossen ist. Ferner sind die Filterkondensatoren in Sternschaltung geschaltet. Mittels dieser Filteranordnung können Störungen eines mit der Filteranordnung verbindbaren elektrischen Wechselspannungsversorgungsnetzes vorteilhaft vom Wechselrichter weitestgehend ferngehalten werden, da die Filteranordnung eine vom elektrischen Wechselspannungsversorgungsnetzes her gesehene grosse Eingangsimpedanz darstellt. Darüber hinaus können auf die Netzspannung des elektrischen Wechselspannungsversorgungsnetzes aufmodulierte Signale, wie beispielsweise Rundsteuersignale, die Filteranordnung passieren, ohne dass sie wesentlich ausgefiltert werden.

In einer bevorzugten Ausführungsform der erfindungsgemässen Energieerzeugungseinrichtung ist eine mit dem Gleichspannungszwischenkreis verbundene und aus zwei in Serie geschalteten ansteuerbaren Leistungshalbleiterschaltern mit einer zu jedem ansteuerbaren Leistungshalbleiterschalter antiparallel geschalteten Diode gebildete Symmetriervorrichtung vorgesehen. Erfindungsgemäss ist der Verbindungspunkt der Leistungshalbleiterschalter mit dem Sternpunkt der Filterkondensatoren verbunden. Vorteilhaft bildet damit der Sternpunkt einen Nullpunktanschluss beispielsweise für einen Nullpunkt eines neben dem elektrischen Wechselspannungsversorgungsnetz zu speisendes Inselnetzes. Ein weiterer Vorteil besteht darin, dass ein über diesen Nullpunktanschluss fliessender Strom, insbesondere mit einer Gleichkomponente und/oder einer Wechselkomponente, insbesondere einer höherfrequenten Wechselkomponente keinen wesentlichen Einfluss auf die Spannungsaufteilung im Gleichspannungszwischenkreis der Energieerzeugungseinrichtung hat, so dass die am Gleichspannungszwischenkreis anliegende Gleichspannung im wesentlichen unbeeinflusst von solchen Störungen bleibt. Desweiteren ermöglicht die Symmetriervorrichtung mit Vorteil eine Einstellung eines vorgebbaren Potentials des Nullpunktes.

Diese und weitere Aufgaben, Vorteile und Merkmale der vorliegenden Erfindung werden aus der nachfolgenden detaillierten Beschreibung eines bevorzugten Ausführungsbeispiels der Erfindung in Verbindung mit der Zeichnung offensichtlich.

### Kurze Beschreibung der Zeichnungen

Es zeigen:
- Fig. 1: eine erste Ausführungsform einer erfindungsgemässen Energieerzeugungseinrichtung,
- Fig. 2: eine zweite Ausführungsform einer erfindungsgemässen Energieerzeugungseinrichtung,
- Fig. 3: eine dritte Ausführungsform einer erfindungsgemässen Energieerzeugungseinrichtung,
- Fig. 4: eine vierte Ausführungsform einer erfindungsgemässen Energieerzeugungseinrichtung und
- Fig. 5: ein Ausschnitt einer fünften Ausführungsform einer erfindungsgemässen Energieerzeugungseinrichtung.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebene Ausführungsform steht beispielhaft für den Erfindungsgegenstand und hat keine beschränkende Wirkung.

### Wege zur Ausführung der Erfindung

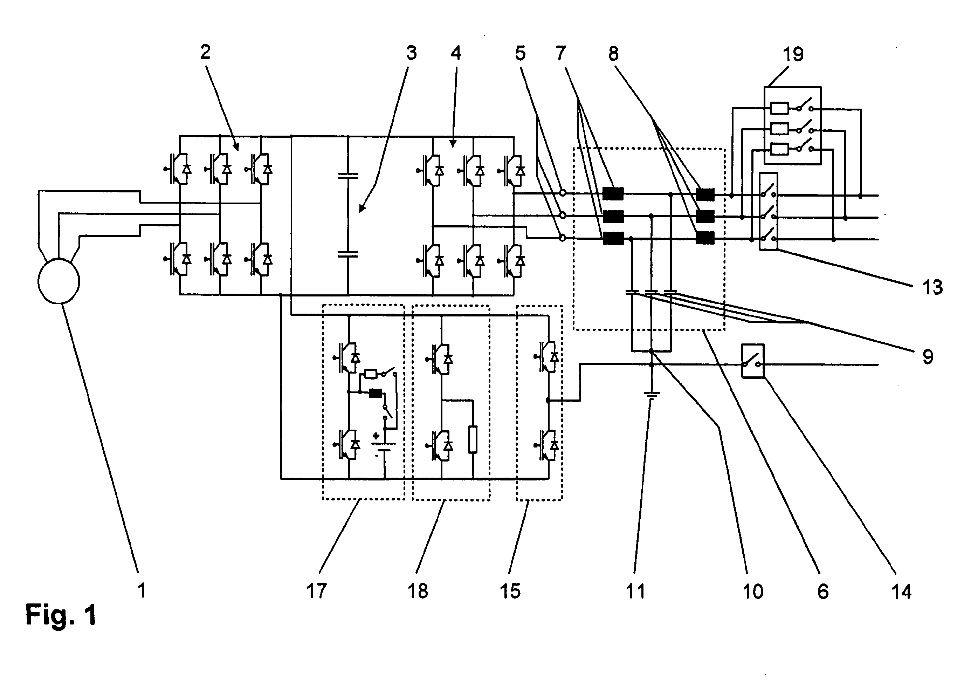

In Fig. 1 ist eine erste Ausführungsform einer erfindungsgemässen Energieerzeugungseinrichtung dargestellt. Die erfindungsgemässe Energieerzeugungseinrichtung umfasst eine Antriebseinheit, insbesondere eine Turbine, welche vorzugsweise als Gasturbine ausgebildet ist. Diese Antriebseinheit ist in Fig. 1 der Übersichtlichkeit halber nicht gezeigt. Mit der Antriebseinheit ist ein Generator 1 gekoppelt, der mit seinen Wechselspannungsausgängen mit einem Gleichrichter 2 verbunden ist, wobei der Gleichrichter 2 mit seiner Gleichspannungsseite mit einem Gleichspannungszwischenkreis 3 verbunden ist. Gemäss Fig. 1 ist der Gleichrichter 2 vorzugsweise als ansteuerbarer dreiphasiger Gleichrichter 2 ausgeführt, der aus drei Zweigpaaren aufgebaut ist, wobei jedes Zweigpaar aus zwei in Serie geschalteten ansteuerbaren Leistungshalbleiterschaltern aufgebaut ist, insbesondere Bipolartransistoren mit isoliert angeordneter Gateelektrode, und eine zu jedem Leistungshalbleiterschalter antiparallel geschaltete Diode umfasst. Mittels des ansteuerbaren Gleichrichters 2 ist eine Beeinflussung des Leistungsfaktors des Generators 1 und damit eine bessere Ausnutzung des Generators 1 möglich, wobei zusätzlich Rotorverluste im Generator 1 reduziert werden können.

Der Gleichspannungszwischenkreis 3 ist gemäss Fig. 1 durch zwei Kondensatoren gebildet. Ferner ist eine Energiespeichereinrichtung 17 vorgesehen, welche der Aufladung beziehungsweise der Zuführung von elektrischer Energie an den Gleichspannungszwischenkreises 3 dient, insbesondere während der Startphase der Turbine sowie bei positiven Lastsprüngen bei einem möglichen Inselnetzbetrieb der Energieerzeugungseinrichtung, wobei die Energiespeichereinrichtung 17 an den Gleichspannungszwischenkreis 3 angeschlossen ist. Im normalen Betrieb der Energieerzeugungseinrichtung 17 dient die Energiespeichereinrichtung 17 zudem zur Zwischenspeicherung elektrischer Energie aus dem Gleichspannungszwischenkreis 3. Desweiteren ist eine Entladeeinrichtung 18 mit dem Gleichspannungszwischenkreis 3 verbunden, welche der Entladung des Gleichspannungszwischenkreises 3, insbesondere bei Überspannungen und/oder beim Abschalten der Energieerzeugungseinrichtung dient. Weiterhin ist ein n-phasiger Wechselrichter 4 mit dem Gleichspannungszwischenkreis 3 verbunden, wobei der Wechselrichter 4 mit n Wechselspannungsanschlüssen 5 ausgebildet ist. In Fig. 1 ist der Wechselrichter 4 beispielhaft mit drei Wechselspannungsanschlüssen 5 gezeigt, sodass n= 3 ist.

An den Wechselspannungsanschlüssen 5 ist gemäss Fig. 1 eine Filteranordnung 6 angeschlossen. Erfindungsgemäss weist die Filteranordnung 6 pro Wechselspannungsanschluss 5 eine erste Filterinduktivität 7 und eine dazu in Serie geschaltete zweite Filterinduktivität 8 auf, wobei am Verbindungspunkt der ersten Filterinduktivität 7 mit der zweiten Filterinduktivität 8 ein Filterkondensator 9 angeschlossen ist. Darüber hinaus sind die Filterkondensatoren 9 der Filteranordnung 6 in Sternschaltung an einem Sternpunkt 10 miteinander verbunden. Mittels der ersten Filterinduktivität 7, der zweiten Filterinduktivität 8 und dem Filterkondensator 9 ist es vorteilhaft möglich, vom Wechselrichter 4 erzeugte Oberschwingungen auszufiltern, um entsprechende Einspeiseanforderungen eines mit der Filteranordnung 6 verbindbaren elektrischen Wechselspannungsversorgungsnetzes erfüllen zu können. Die Filteranordnung 6 stellt eine vom elektrischen Wechselspannungsversorgungsnetz her gesehene grosse Eingangsimpedanz der Energieerzeugungseinrichtung dar. Dadurch können auftretende Störungen des elektrischen Wechselspannungsversorgungsnetzes mit der Filteranordnung 6 vorteilhaft weitestgehend von der Energieerzeugungseinrichtung, insbesondere vom Wechselrichter 4 ferngehalten werden.

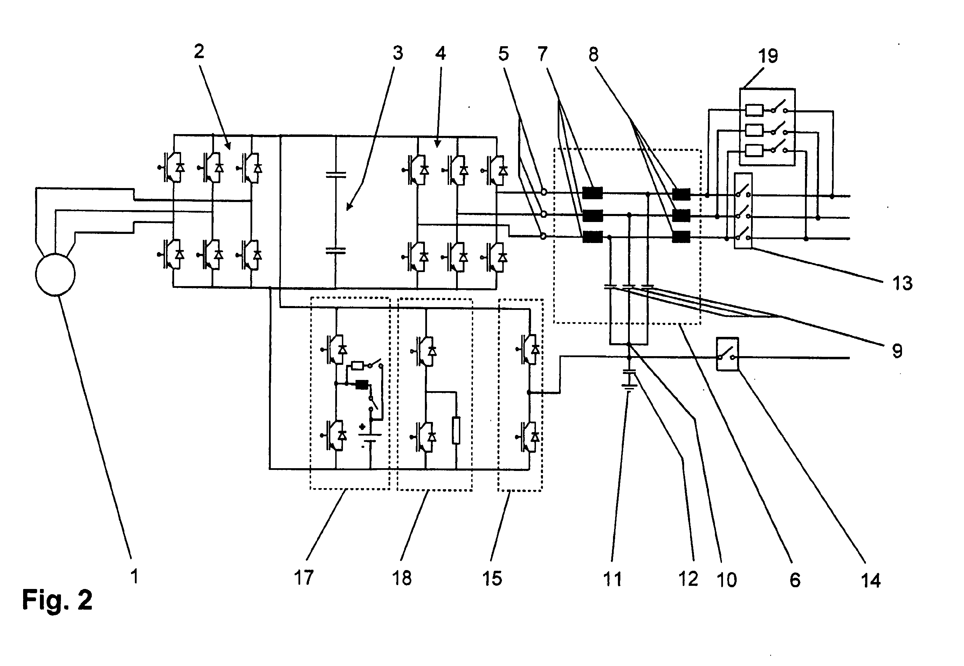

Gemäss Fig. 1 ist der Sternpunkt 10 erfindungsgemäss mit einem Erdpotential 11 verbunden, wodurch Ströme, welche durch vom Wechselrichter 6 erzeugte Oberschwingungen generiert werden und/oder welche durch mittel- und hochfrequenter Anteile in der Netzspannung des elektrischen Wechselspannungsversorgungsnetzes erzeugt werden, abgeleitet werden können. In einer zweiten Ausführungsform der erfindungsgemässen Energieerzeugungseinrichtung gemäss Fig. 2 ist der Sternpunkt 10 über einen Erdungskondensator 12 mit Erdpotential 11 verbunden. Dadurch können vorteilhaft Potentialsprünge des Sternpunktes 10 gegenüber dem Erdpotential 11 reduziert werden.

In den Ausführungsformen der erfindungsgemässen Energieerzeugungseinrichtung gemäss Fig. 1 und Fig. 2 ist die zweite Filterinduktivität 8 mit einem ersten Netztrennschalter 13 verbunden. Dadurch lassen sich einzelne Phasen des elektrischen Wechselspannungsversorgungsnetzes mit der Energieerzeugungseinrichtung, insbesondere mit der Filteranordnung 6 verbinden und bei einem reinen Inselbetrieb oder einer Störung, beispielsweise eines Ausfalls des elektrischen Wechselspannungsversorgungsnetzes, trennen. Die für die Anbindung des Inselnetzes notwendigen Anschlüsse der Energieerzeugungseinrichtung, insbesondere zwischen der Filteranordnung 6 und dem ersten Netztrennschalter 13 sind der Übersichtlichkeit halber in Fig. 1 und Fig. 2 nicht dargestellt. Ferner ist gemäss Fig.1 und Fig. 2 eine Ladeeinrichtung 19 vorgesehen, welche mit der zweiten Filterinduktivität 8 verbunden ist. Die Ladeeinrichtung 19 ist weiterhin mit einzelnen Phasen des elektrischen Wechselspannungsversorgungsnetzes verbindbar und weist dazu für jede Verbindung zu den zweiten Filterinduktivitäten 8 jeweils einen Trennschalter mit einem in Serie geschalteten Widerstand auf. Mittels der Ladeeinrichtung 19 ist es vorteilhaft möglich, den Gleichspannungszwischenkreis 3 bei geschlossenen Trennschaltern aus dem elektrischen Wechselspannungsversorgungsnetz über die Widerstände, die Filteranordnung 6 und den Wechselrichter 4 zu laden.

Desweiteren ist gemäss Fig. 1 und Fig. 2 eine mit dem Gleichspannungszwischenkreis 3 verbundene und aus zwei in Serie geschalteten ansteuerbaren Leistungshalbleiterschaltern mit einer zu jedem ansteuerbaren Leistungshalbleiterschalter antiparallel geschalteten Diode gebildete Symmetriervorrichtung 15 vorgesehen. Der Verbindungspunkt der Leistungshalbleiterschalter ist dabei erfindungsgemäss mit dem Sternpunkt 10 verbunden. Durch diese Verbindung bildet der Sternpunkt einen Nullpunktanschluss, beispielsweise für ein neben dem elektrischen Wechselspannungsversorgungsnetz zu speisendes Inselnetz, wobei ein mit dem Nullpunktanschluss verbindbarer Nullpunkt des Inselnetzes durch entsprechende Ansteuerung der Leistungshalbleiterschalter der Symmetriervorrichtung mit Vorteil auf ein vorgebbares Potential eingestellt werden kann. Ein über diesen Nullpunktanschluss fliessender Strom, infolge einer Unsymmetrie im Inselnetz, insbesondere ein Strom mit einer Gleichkomponente und/oder einer Wechselkomponente, hat ferner keinen wesentlichen Einfluss auf den Gleichspannungszwischenkreis 3 der Energieerzeugungseinrichtung, da keine direkte Verbindung oder eine wie aus dem Stand der Technik bekannte Verbindung des Verbindungspunktes der beiden Leistungshalbleiterschalter über ein passives Bauelement, insbesondere über eine Induktivität, mit dem Gleichspannungszwischenkreis 3 besteht. Die am Gleichspannungszwischenkreis 3 anliegende Gleichspannung bleibt deshalb im wesentlichen unbeeinflusst von solchen Stromkomponenten.

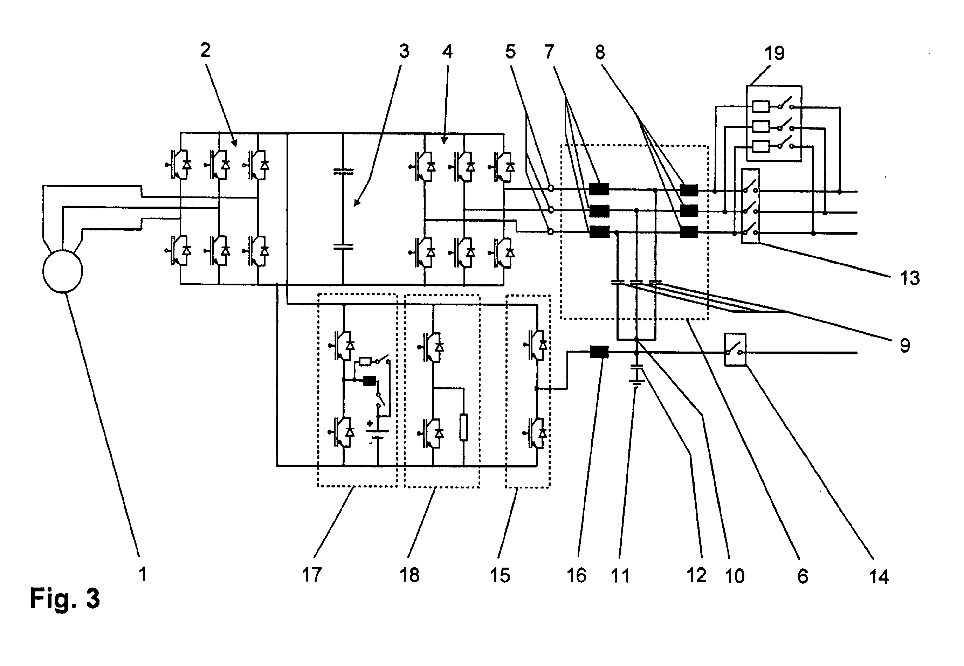

In einer dritten Ausführungsform der erfindungsgemässen Energieerzeugungseinrichtung gemäss Fig. 3 ist der Verbindungspunkt der Leistungshalbleiterschalter der Symmetriervorrichtung 15 über eine Glättungsinduktivität 16 mit dem Sternpunkt 10 verbunden. Mittels dieser Glättungsinduktivität 16 lässt sich der vorstehend erwähnte und über den Nullpunktanschluss fliessende Strom glätten, insbesondere falls dieser Strom eine Wechselkomponente aufweist.

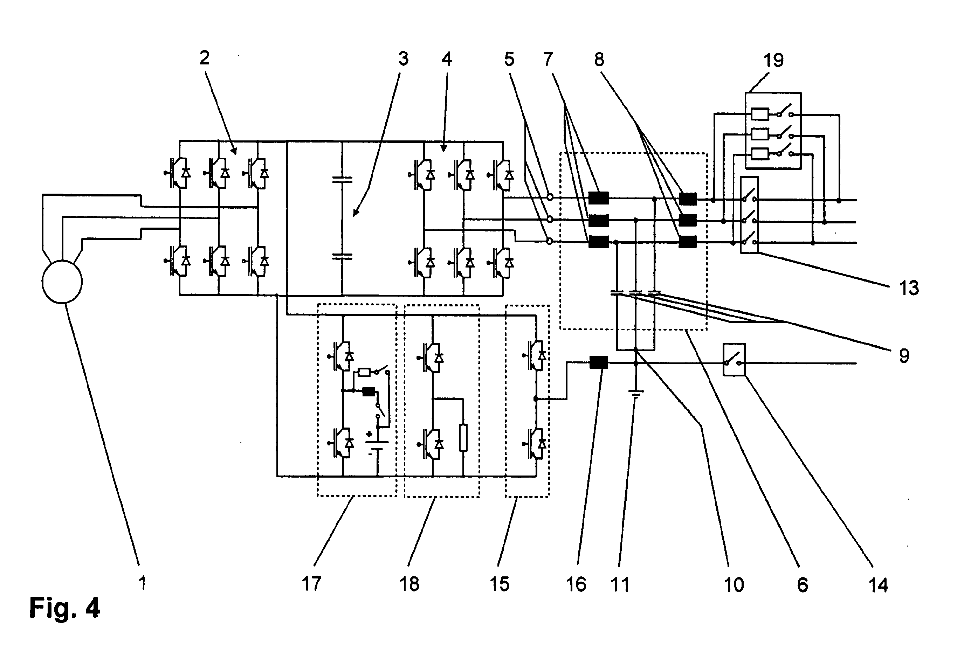

In einer vierten Ausführungsform der erfindungsgemässen Energieerzeugungseinrichtung gemäss Fig. 4 ist die Glättungsinduktivität 16 entsprechend Fig. 3 mit dem Sternpunkt 10 verbunden, jedoch ist der Sternpunkt 10 direkt und nicht wie in Fig. 3 gezeigt über den Erdungskondensator 12 mit dem Erdpotential 11 verbunden. Durch Einsparung des Erdungskondensators 12 stellt diese Ausführungsform der erfindungsgemässen Energieerzeugungseinrichtung eine preiswerte erfindungsgemässe Alternative zur Ausführungsform der erfindungsgemässen Energieerzeugungseinrichtung gemäss Fig. 3 dar.

Gemäss Fig. 1, Fig. 2, Fig. 3 und Fig. 4 ist der Sternpunkt 10 mit einem zweiten Netztrennschalter 14 verbunden. Dadurch lässt sich der Nullpunkt des Inselnetzes mit der Energieerzeugungseinrichtung, insbesondere mit der Symmetriervorrichtung 15 verbinden oder bei einer Störung, beispielsweise bei Ausfall des Inselnetzes, trennen.

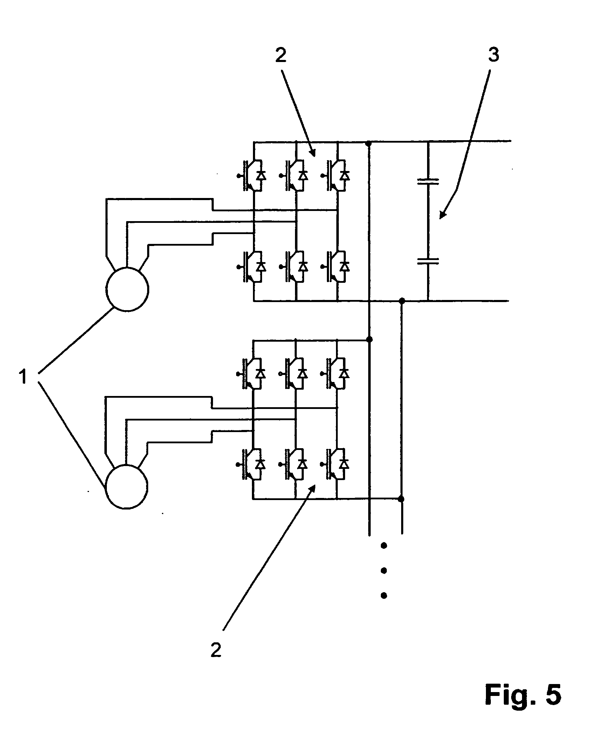

In Fig. 5 ist ein Ausschnitt einer fünften Ausführungsform der erfindungsgemässen Energieerzeugungseinrichtung dargestellt. Dieses fünfte Ausführungsform unterscheidet sich von den Ausführungsformen der erfindungsgemässen Energieerzeugungseinrichtung gemäss Fig. 1 bis Fig. 4 dadurch, dass mindestens ein weiterer Gleichrichter 2 mit seiner Gleichspannungsseite mit dem Gleichspannungszwischenkreis 3 verbunden ist, wobei der Gleichrichter 2 mit Wechselspannungsausgängen eines weiteren Generators 1 verbunden ist und der Generator 1 mit einer in Fig. 4 der Übersichtlichkeit wegen nicht gezeigten weiteren Antriebseinheit gekoppelt ist. Vorzugsweise ist die Antriebseinheit, insbesondere eine Turbine, als Gasturbine ausgebildet. Durch diesen mindestens einen weiteren Gleichrichter 2 mit vorgeschaltetem Generator 1 und der Antriebseinheit kann die Gleichspannung am Gleichspannungszwischenkreis 3 weitestgehend unabhängig von der Momentanleistung der einzelnen Generatoren 1 eingestellt werden.

Insgesamt ist die erfindungsgemässe Energieerzeugungseinrichtung sehr einfach und kostengünstig realisierbar, da der Schaltungsaufwand äusserst gering gehalten werden kann und zudem nur eine geringe Anzahl an Bauelementen für den Aufbau benötigt wird.

### Bezugszeichenliste

- 1: Generator
- 2: Gleichrichter
- 3: Gleichspannungszwischenkreis
- 4: Wechselrichter
- 5: Wechselspannungsanschlüsse
- 6: Filteranordnung
- 7: erste Filterinduktivität
- 8: zweite Filterinduktivität
- 9: Filterkondensator
- 10: Sternpunkt
- 11: Erdpotential
- 12: Erdungskondensator
- 13: erster Netztrennschalter
- 14: zweiter Netztrennschalter
- 15: Symmetriervorrichtung
- 16: Glättungsinduktivität
- 17: Energiespeichereinrichtung
- 18: Entladeeinrichtung
- 19: Ladeeinrichtung

## Patentansprüche

1. Energieerzeugungseinrichtung umfassend
einen mit einer Antriebseinheit, insbesondere mit einer Turbine gekoppelten Generator (1), der über einen Gleichrichter (2) mit einem Gleichspannungszwischenkreis (3) verbunden ist,
einen mit dem Gleichspannungszwischenkreis (3) verbundenen Wechselrichter (4), der wechselspannungsausgangsseitig n-phasig mit n Wechselspannungsanschlüssen (5) ausgebildet ist, und
eine an den Wechselspannungsanschlüssen (5) angeschlossene Filteranordnung (6),
**dadurch gekennzeichnet,**
**dass** die Filteranordnung (6) pro Wechselspannungsanschluss (5) eine erste Filterinduktivität (7) und eine dazu in Serie geschaltete zweite Filterinduktivität (8) aufweist und am Verbindungspunkt der ersten Filterinduktivität (7) mit der zweiten Filterinduktivität (8) ein Filterkondensator (9) angeschlossen ist,
**dass** die Filterkondensatoren (9) in Stemschaltung an einem Stempunkt (10) miteinander verbunden sind,
**dass** der Sternpunkt (10) mit einem Erdpotential (11) verbunden ist,
**dass** eine mit dem Gleichspannungszwischenkreis (3) verbundene und aus zwei in Serie geschalteten ansteuerbaren Leistungshalbleiterschaltern mit jeweils einer antiparallel geschalteten Diode gebildete Symmetriervorrichtung (15) vorgesehen ist, und
**dass** der Verbindungspunkt der Leistungshalbleiterschalter mit dem Stempunkt (10) verbunden ist.

2. Energieerzeugungseinrichtung nach Anspruch 1, **dadurch gekennzeichnet, dass** der Gleichrichter (2) als ansteuerbarer dreiphasiger Gleichrichter (2) ausgeführt ist.

3. Energieerzeugungseinrichtung nach Anspruch 1, **dadurch gekennzeichnet, dass** der Sternpunkt (10) über einen Erdungskondensator (12) mit Erdpotential (11) verbunden ist

4. Energieerzeugungseinrichtung nach Anspruch 1, **dadurch gekennzeichnet, dass** der Verbindungspunkt der Leistungshalbleiterschalter der Symmetriervorrichtung (15) über eine Glättungsinduktivität (16) mit dem Stempunkt (10) verbunden ist.

5. Energieerzeugungseinrichtung nach Anspruch 1 oder 4, **dadurch gekennzeichnet, dass** die zweite Filterinduktivität (8) mit einem ersten Netztrennschalter (13) verbunden ist.

6. Energieerzeugungseinrichtung nach einem der Ansprüche 1, 4 oder 5, **dadurch gekennzeichnet, dass** eine mit der zweiten Filterinduktivität (8) verbundene Ladeeinrichtung (19) vorgesehen, wobei die Ladeeinrichtung (19) für jede Verbindung zu den zweiten Filterinduktivitäten (8) jeweils einen Trennschalter mit einem in Serie geschalteten Widerstand aufweist.

7. Energieerzeugungseinrichtung nach Anspruch 6, **dadurch gekennzeichnet, dass** der Stempunkt (10) mit einem zweiten Netztrennschalter (14) verbunden ist.

8. Energieerzeugungseinrichtung nach einem der vorhergehenden Ansprüche, **dadurch gekennzeichnet, dass** mindestens ein weiterer Gleichrichter (2) mit dem Gleichspannungszwischenkreis (3) verbunden ist, wobei der mindestens eine weitere Gleichrichter (2) mit einem weiteren Generator (1) verbunden ist und der weitere Generator (1) mit einer weiteren, insbesondere als Turbine ausgebildeten Antriebseinheit gekoppelt ist.

## Claims

1. Power generating device comprising:
a generator (1), which is coupled to a drive unit, in particular to a turbine, and is connected via a rectifier (2) to a DC voltage intermediate circuit (3),
an inverter (4), which is connected to the DC voltage intermediate circuit (3) and, on the AC voltage output side, has n phases with n AC voltage connections (5), and
a filter arrangement (6), which is connected to the AC voltage connections (5),
**characterized**
**in that** the filter arrangement (6) has a first filter inductance (7) and a second filter inductance (8), which is connected in series with the first, for each AC voltage connection (5), and a filter capacitor (9) is connected to the junction point of the first filter inductance (7) and the second filter inductance (8),
**in that** the filter capacitors (9) are connected to one another in a star circuit at a star point (10),
**in that** the star point (10) is connected to ground potential (11), in that a balancing apparatus (15) is provided, which is connected to the DC voltage intermediate circuit (3) and is formed from two series-connected controllable power semiconductor switches, each having a back-to-back parallel-connected diode, and
**in that** the junction point of the power semiconductor switches is connected to the star point (10).

2. Power generating device according to Claim 1, **characterized in that** the rectifier (2) is in the form of a controllable three-phase rectifier (2).

3. Power generating device according to Claim 1, **characterized in that** the star point (10) is connected to ground potential (11) via a grounding capacitor (12).

4. Power generating device according to Claim 1, **characterized in that** the junction point of the power semiconductor switches is connected to the star point (10) via a smoothing inductance (16).

5. Power generating device according to Claim 1 or 4, **characterized in that** the second filter inductance (8) is connected to a first network isolating switch (13).

6. Power generating device according to one of Claims 1, 4 or 5, **characterized in that** a charging device (19) is provided, which is connected to the second filter inductance (8), with the charging device (19) in each case having an isolating switch with a series-connected resistance for each connection for the second filter inductances (8).

7. Power generating device according to Claim 6, **characterized in that** the star point (10) is connected to a second network isolating switch (14).

8. Power generating device according to one of the preceding claims, **characterized in that** at least one further rectifier (2) is connected to the DC voltage intermediate circuit (3), with the at least one further rectifier (2) being connected to a further generator (1), and the further generator (1) being coupled to a further drive unit which is, in particular, in the form of a turbine.

## Revendications

1. Dispositif de production d'énergie comprenant un générateur (1) couplé avec une unité d'entraînement, notamment avec une turbine, lequel est relié par le biais d'un redresseur (2) à un circuit intermédiaire à tension continue (3), un onduleur (4) relié au circuit intermédiaire à tension continue (3), lequel est réalisé n-phasé du côté de la sortie en tension alternative avec n bornes de tension alternative (5) et un arrangement filtrant (6) raccordé aux bornes de tension alternative (5), **caractérisé en ce que** l'arrangement filtrant (6) présente pour chaque borne de tension alternative (5) une première inductance de filtrage (7) et une deuxième inductance de filtrage (8) branchée en série avec celle-ci et un condensateur de filtrage (9) est raccordé au niveau du point de jonction entre la première inductance de filtrage (7) et la deuxième inductance de filtrage (8), que les condensateurs de filtrage (9) sont reliés ensemble dans un circuit en étoile au niveau d'un point neutre (10), que le point neutre (10) est relié avec un potentiel de terre (11), qu'il est prévu un dispositif d'équilibrage (15) formé par deux commutateurs en semiconducteur de puissance commandables branchés en séries, reliés avec le circuit intermédiaire à tension continue (3) et respectivement munis d'une diode branchée en antiparallèle, et que le point de jonction des commutateurs en semiconducteur de puissance est relié au point neutre (10).

2. Dispositif de production d'énergie selon la revendication 1, **caractérisé en ce que** le redresseur (2) est réalisé sous la forme d'un redresseur (2) triphasé commandable.

3. Dispositif de production d'énergie selon la revendication 1, **caractérisé en ce que** le point neutre (10) est relié au potentiel de terre (11) par le biais d'un condensateur de mise à la terre (12).

4. Dispositif de production d'énergie selon la revendication 1, **caractérisé en ce que** le point de jonction des commutateurs en semiconducteur de puissance du dispositif d'équilibrage (15) est relié avec le point neutre (10) par le biais d'une inductance de lissage (16).

5. Dispositif de production d'énergie selon la revendication 1 ou 4, **caractérisé en ce que** la deuxième inductance de filtrage (8) est reliée à un premier sectionneur de réseau (13).

6. Dispositif de production d'énergie selon l'une des revendications 1, 4 ou 5, **caractérisé en ce qu'**il est prévu un dispositif de charge (19) relié à la deuxième inductance de filtrage (8), le dispositif de charge (19) présentant pour chaque liaison avec les deuxièmes inductances de filtrage (8) à chaque fois un sectionneur avec une résistance branchée en série.

7. Dispositif de production d'énergie selon la revendication 6, **caractérisé en ce que** le point neutre (10) est relié à un deuxième sectionneur de réseau (14).

8. Dispositif de production d'énergie selon l'une des revendications précédentes, **caractérisé en ce qu'**au moins un redresseur (2) supplémentaire est relié au circuit intermédiaire à tension continue (3), l'au moins un redresseur (2) supplémentaire étant relié à un générateur (1) supplémentaire et le générateur (1) supplémentaire étant couplé avec une unité d'entraînement supplémentaire, notamment réalisée sous la forme d'une turbine.
